# EUROPEAN PATENT SPECIFICATION

(11) **EP 1 713 865 B1**
(45) Date of publication and mention of the grant of the patent: **28.11.2012**
(21) Application number: 05701641.2
(22) Date of filing: 04.02.2005
(51) Int. Cl.: C09B 67/22, C09D 11/00

(54) **MIXTURES OF REACTIVE DYES AND THEIR USE**
MISCHUNGEN VON REAKTIVFARBSTOFFEN UND IHRE VERWENDUNG
MÉLANGES DE COLORANTS RÉACTIFS ET LEUR UTILISATION

(30) Priority: 13.02.2004 EP 04100554
(43) Date of publication of application: 25.10.2006
(73) Proprietor: Huntsman Advanced Materials (Switzerland) GmbH, 4057 Basel (CH)
(72) Inventor: HANNEMANN, Klaus, 79540 Lörrach (DE)
(86) International application number: PCT/EP2005/050477
(87) International publication number: WO 2005/080508

(56) References cited:
- EP-A- 0 731 145
- EP-A- 0 827 987
- EP-A- 0 870 807
- EP-A- 0 969 051
- EP-A- 0 976 792
- EP-A- 1 035 173
- WO-A-00/06652
- WO-A-00/43455
- WO-A-03/080739

## Description

The present invention relates to mixtures of reactive dyes, which mixtures are suitable for dyeing or printing nitrogen-containing or hydroxy-group-containing fibre materials and yield dyeings or prints having good all-round fastness properties and a high degree of constancy of shade.

The practice of dyeing has recently led to higher demands being made on the quality of the dyeings and the economic viability of the dyeing process. As a result, there continues to be a need for novel, readily obtainable dyeing compositions having good properties, especially in respect of their application.

Dyeing today requires reactive dyes that, for example, have sufficient substantivity and at the same time exhibit good ease of washing-off of unfixed dye. In addition, they should exhibit a good colour yield and a high reactivity, the objective being especially to obtain dyeings having high degrees of fixing. In addition, high demands are made on the coloristic properties of the dyeings produced. In many cases, however, the properties of reactive dyes are not sufficient to meet the demands, resulting in the need to have recourse to combinations of reactive dyes.

The problem underlying the present invention is therefore to provide novel mixtures of reactive dyes, which mixtures are especially suitable for dyeing and printing fibre materials and possess the above-described qualities to a high degree. They should also yield dyeings having good all-round fastness properties, for example fastness to light and to wetting, while at the same time exhibiting good build-up behaviour. It is also desirable for the dyeings to exhibit a high degree of constancy of shade under varying light conditions, that is to say for the viewer to be left with the same colour impression on viewing the dyeings in daylight and artificial light.

The present invention accordingly relates to dye mixtures comprising at least one dye, for example one, two or three dyes, preferably one dye, of formula 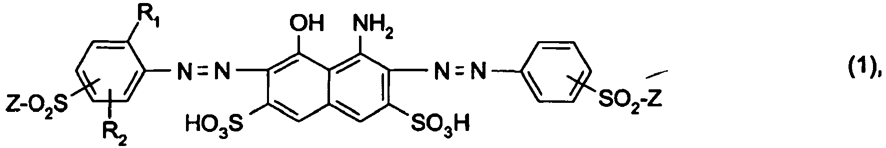 at least one dye, for example one, two or three dyes, preferably one dye, of formula 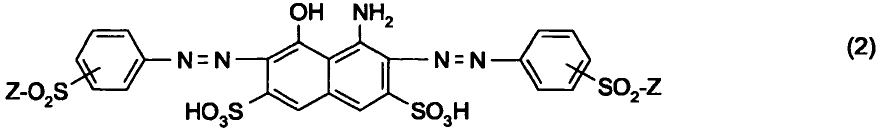 and at least one dye, for example one, two or three dyes, from the group of formulae 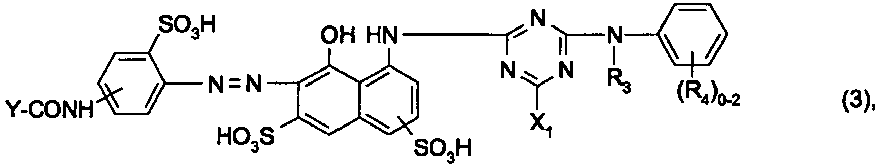 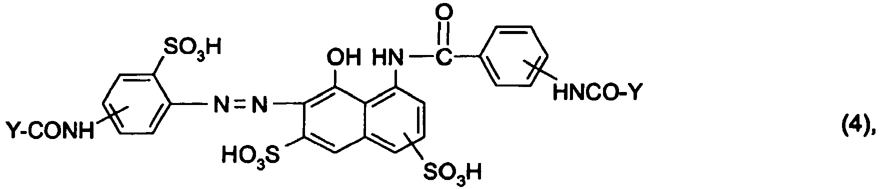 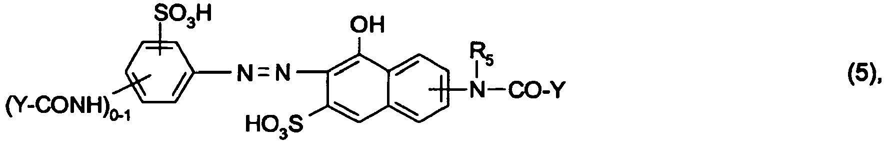 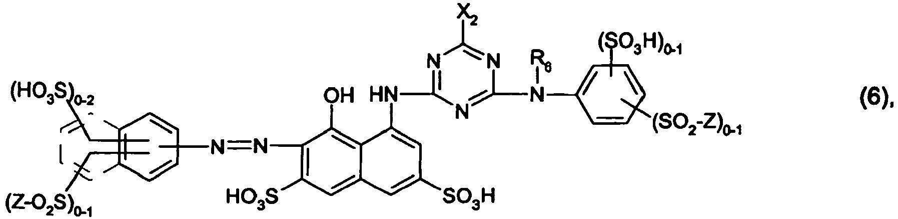 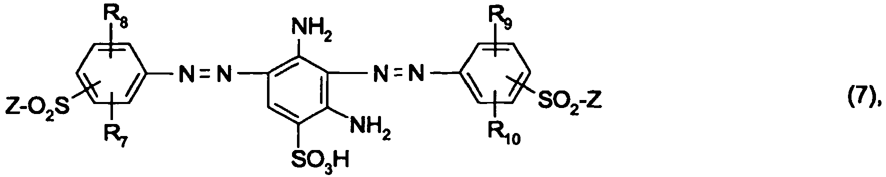 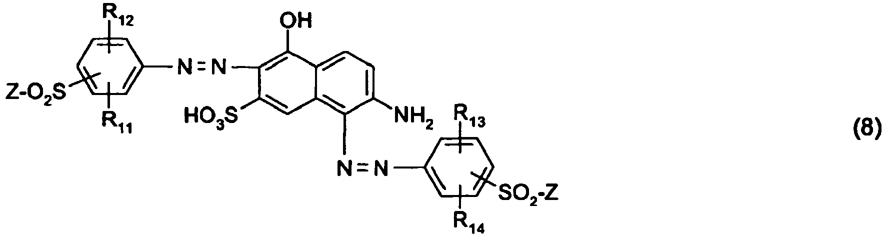 and 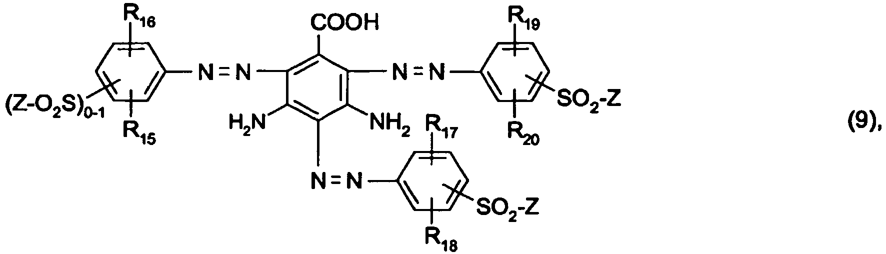 wherein
R₁ is C₁-C₄alkoxy,
R₂ is hydrogen, C₁-C₄alkyl or C₁-C₄alkoxy,
R₃, R₅ and R₆ are each independently of the others hydrogen or unsubstituted or substituted C₁-C₄alkyl,
(R₄)₀₋₂ denotes from 0 to 2 identical or different substituents from the group halogen, C₁-C₄alkyl, C₁-C₄alkoxy and C₂-C₄alkanoylamino,
R₇, R₈, R₉, R₁₀, R₁₁, R₁₂, R₁₃, R₁₄, R₁₅, R₁₆, R₁₇, R₁₈, R₁₉ and R₂₀ are each independently of the others hydrogen, C₁-C₄alkyl, C₁-C₄alkoxy, sulfo or halogen,
X₁ and X₂ are halogen,
each Y, independently of any other(s), is a -CH(Hal)-CH₂-Hal or -C(Hal)=CH₂ group and Hal is halogen, and
each Z, independently of any other(s), is vinyl or a -CH₂-CH₂-U radical and U is a group that can be removed under alkaline conditions.

WO,A1,03/080739, EP,A1,870 807, WO,A1,2004/069937 (published late) and WO,A1,00/43455 all disclose mixtures of reactive dyes suitable for dyeing hydroxy- and/or nitrogen- containing fibre materials.

Suitable combinations of at least two or three dyes from the group of dyes of formula (3), (4), (5), (6), (7), (8) and (9) are, for example, a dye of formula (3) and a dye of formula (7), or a dye of formula (4) and a dye of formula (7), or a dye of formula (6) and a dye of formula (7), or a dye of formula (3), a dye of formula (5) and a dye of formula (7), or a dye of formula (7) and a dye of formula (8), or a dye of formula (8) and a dye of formula (9), or a dye of formula (3) and a dye of formula (9).

As C₁-C₄alkyl there come into consideration for R₂, R₃, R₄, R₅, R₆, R₇, R₈, R₉, R₁₀, R₁₁, R₁₂, R₁₃, R₁₄, R₁₅, R₁₆, R₁₇, R₁₈, R₁₉ and R₂₀, each independently of the others, for example, methyl, ethyl, propyl, isopropyl, butyl, sec-butyl, tert-butyl and isobutyl, preferably methyl and ethyl. As C₁-C₄alkyl, the radicals R₂, R₄, R₇, R₈, R₉, R₁₀, R₁₁, R₁₂, R₁₃, R₁₄, R₁₅, R₁₆, R₁₇, R₁₈, R₁₉ and R₂₀ are especially methyl. The mentioned alkyl radicals R₃, R₅ und R₆ may be unsubstituted or may be substituted, for example, by hydroxy, sulfo, sulfato, cyano or by carboxyl. Preference is given to the corresponding unsubstituted radicals.

As C₁-C₄alkoxy there come into consideration for R₁, R₂, R₄, R₇, R₈, R₉, R₁₀, R₁₁, R₁₂, R₁₃, R₁₄, R₁₅, R₁₆, R₁₇, R₁₈, R₁₉ and R₂₀, each independently of the others, for example, methoxy, ethoxy, n-propoxy, isopropoxy, n-butoxy and isobutoxy, preferably methoxy and ethoxy and especially methoxy.

As halogen there come into consideration for R₄, R₇, R₈, R₉, R₁₀, R₁₁, R₁₂, R₁₃, R₁₄, R₁₅, R₁₆, R₁₇, R₁₈, R₁₉ and R₂₀, each independently of the others, for example, fluorine, chlorine and bromine, preferably chlorine and bromine and especially chlorine.

As C₂-C₄alkanoylamino there come into consideration for R₄, for example, acetylamino and propionylamino, preferably acetylamino.

For X₁ and X₂, each independently of the other, there come into consideration, for example, fluorine, chlorine and bromine, preferably fluorine and chlorine and especially chlorine.

Hal is preferably chlorine or bromine, especially bromine.

As leaving group U there come into consideration, for example, -Cl, -Br, -F, -OSO₃H, -SSO₃H, -OCO-CH₃, -OPO₃H₂, -OCO-C₆H₅, -OSO₂-C₁-C₄alkyl and -OSO₂-N(C₁-C₄alkyl)₂. U is preferably a group of formula -Cl, -OSO₃H, -SSO₃H, -OCO-CH₃, -OCO-C₆H₅ or -OPO₃H₂, especially -Cl or -OSO₃H and more especially -OSO₃H.

Examples of suitable radicals Z are accordingly vinyl, β-bromo- or β-chloro-ethyl, β-acetoxyethyl, β-benzoyloxyethyl, β-phosphatoethyl, β-sulfatoethyl and β-hiosulfatoethyl.

Z is independently preferably vinyl, β-chloroethyl or β-sulfatoethyl, especially vinyl or β-sulfatoethyl.

Preferably, R₂ is hydrogen or C₁-C₄alkoxy, especially C₁-C₄alkoxy.

Preferably, R₃, R₅ and R₆ are each independently of the others hydrogen or C₁-C₄alkyl.

R₃ is more preferably hydrogen, methyl or ethyl, especially ethyl.

R₅ and R₆, each independently of the other, are more preferably hydrogen, methyl or ethyl, especially hydrogen.

Preferably, the dye of formula (1) is a dye of formula 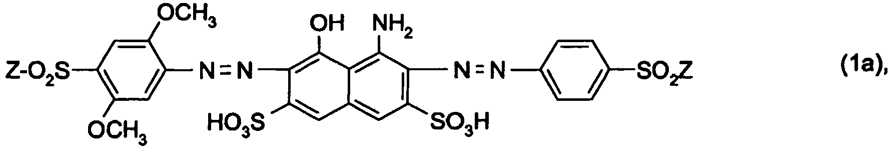 wherein
Z is vinyl or β-sulfatoethyl, preferably β-sulfatoethyl.

Preferably, the dye of formula (2) is a dye of formula 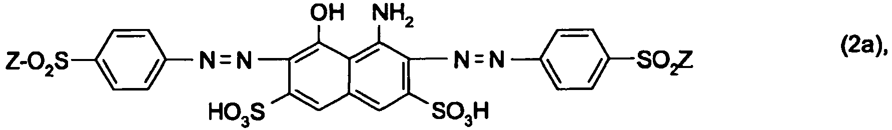 wherein
Z is vinyl or β-sulfatoethyl, preferably β-sulfatoethyl.

The dye of formula (3) is, for example, a dye of formula 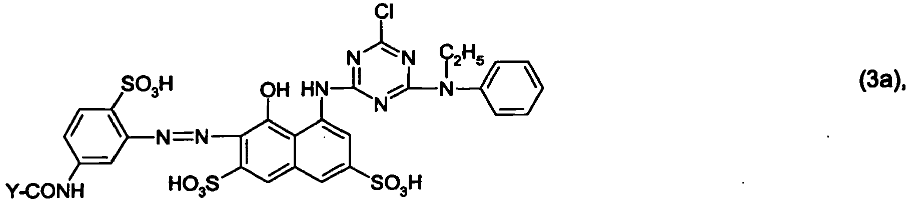 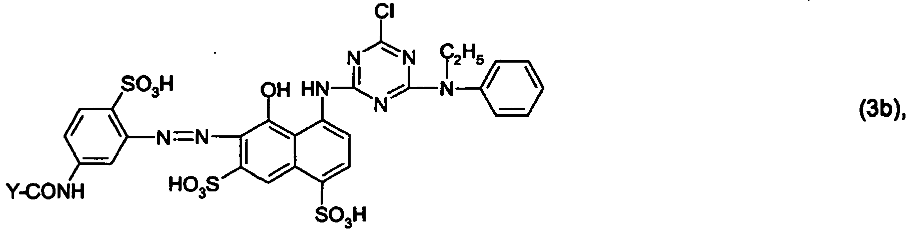 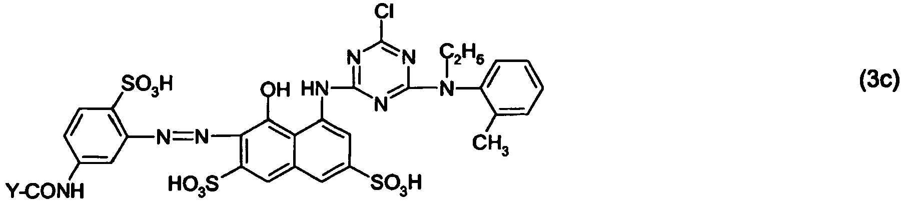 or 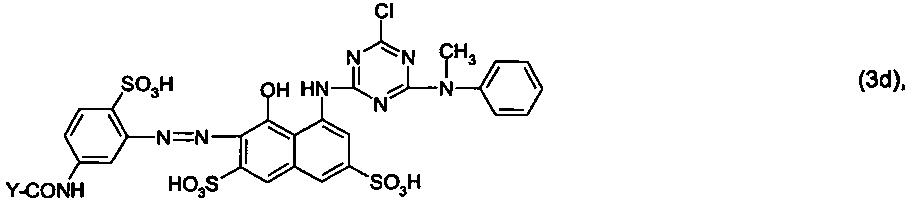 preferably of formula (3a), wherein
Y is a -CH(Br)-CH₂-Br or -C(Br)=CH₂ group.

The dye of formula (4) is, for example, a dye of formula 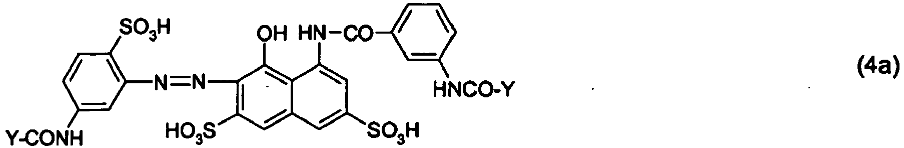 or 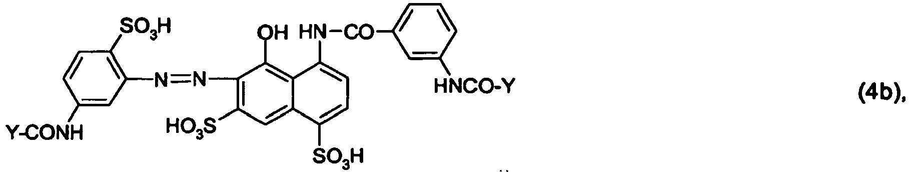 preferably of formula (4b), wherein
each Y is a -CH(Br)-CH₂-Br or -C(Br)=CH₂ group.

The dye of formula (5) is, for example, a dye of formula 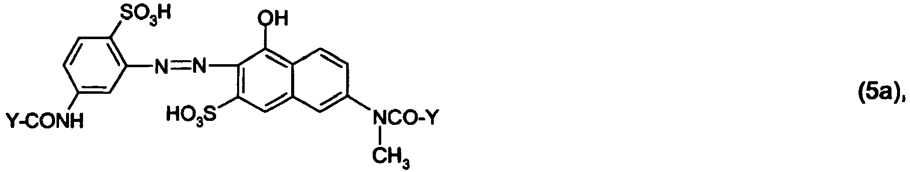 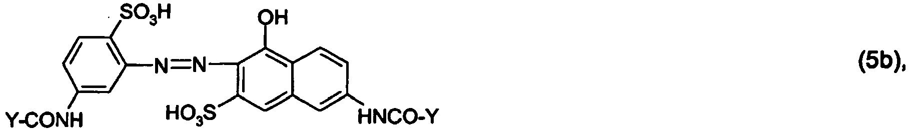 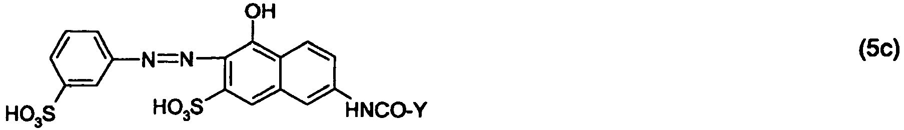 or 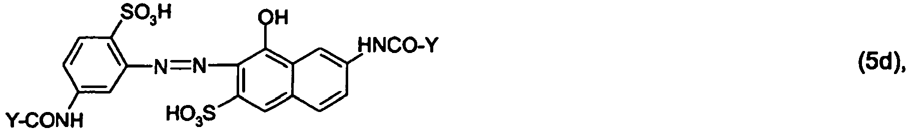 preferably of formula (5d), wherein
each Y is a -CH(Br)-CH₂-Br or -C(Br)=CH₂ group.

The dye of formula (6) is, for example, a dye of formula 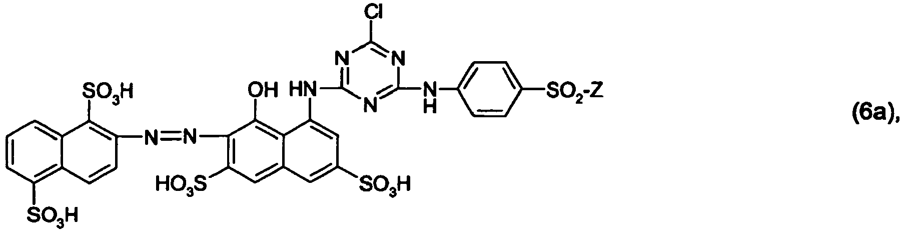 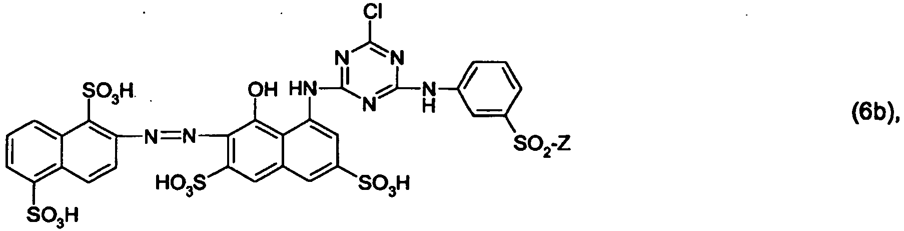 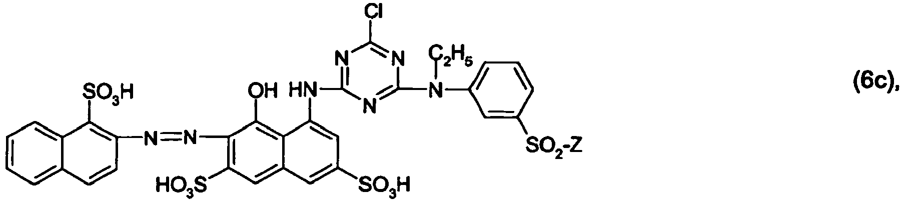 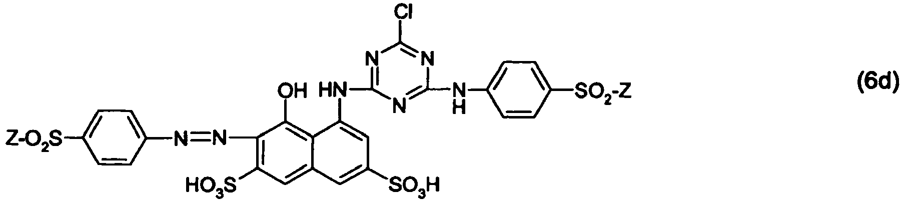 or 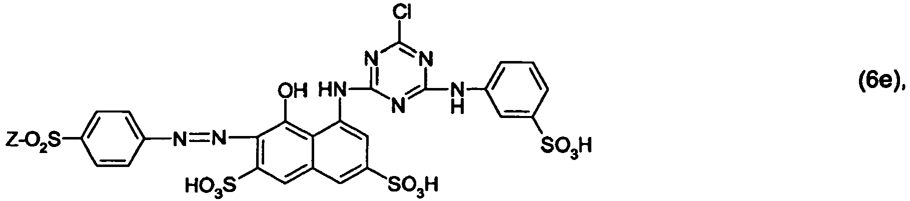 wherein
each Z is vinyl or β-sulfatoethyl, preferably β-sulfatoethyl.

Preferably, the dye of formula (6) is a dye of formula 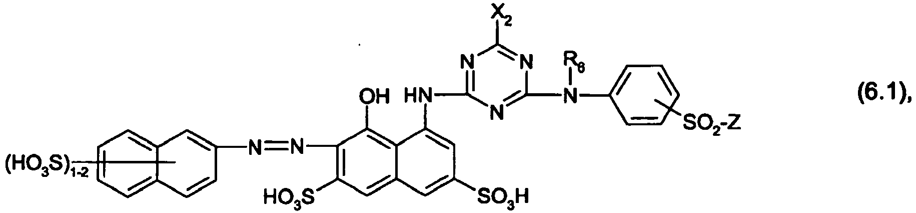 wherein R₆, X₂ and Z each have the definitions and preferred meanings given hereinbefore.

The dye of formula (7) is, for example, a dye of formula 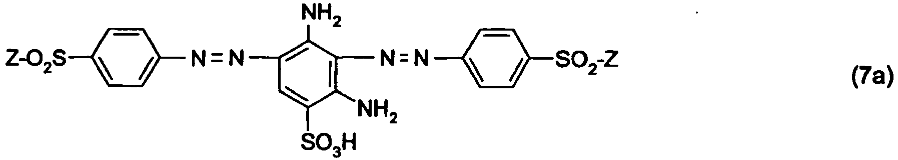 or 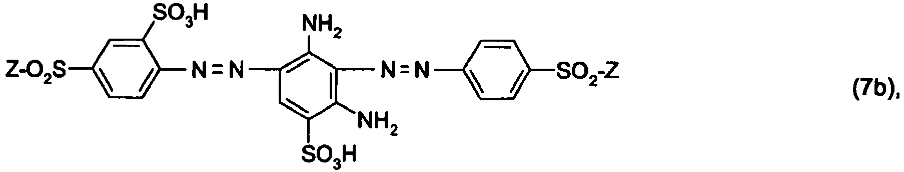 wherein
each Z is vinyl or β-sulfatoethyl, preferably β-sulfatoethyl.

As dye of formula (8) there also comes into consideration a dye mixture that comprises at least one compound from formulae (8a) and (8b) 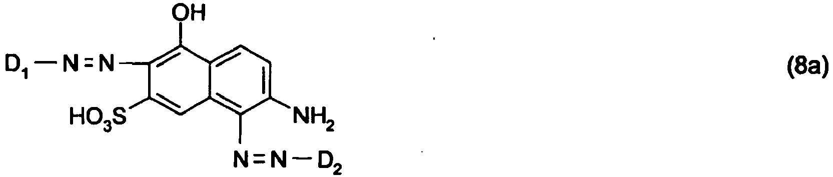 and 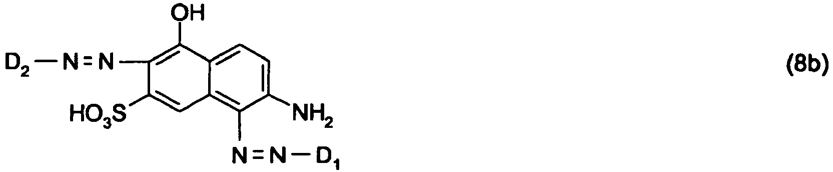 together with at least one compound from formulae (8c) and (8d) 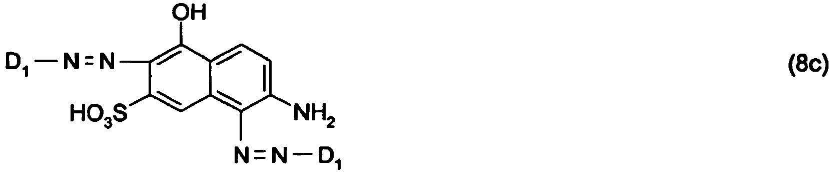 and 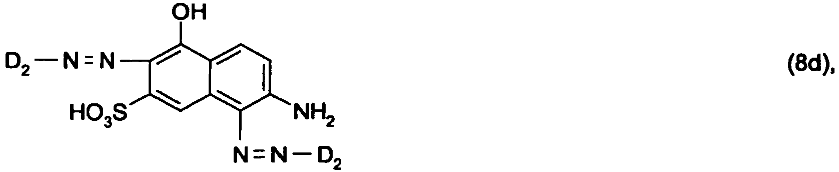 wherein
D₁ is a radical of formula 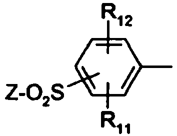 and
D₂ is a radical of formula 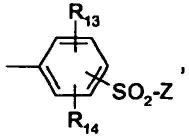 D₁ and D₂ are not identical, and R₁₁, R₁₂, R₁₃, R₁₄ and Z each have the definitions and preferred meanings given hereinbefore.

Examples of suitable dyes of formula (8) are the dyes of formulae 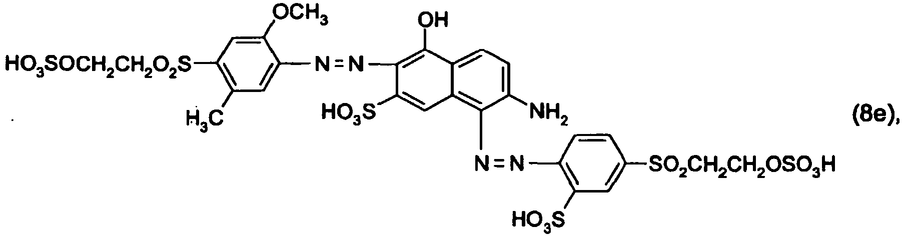 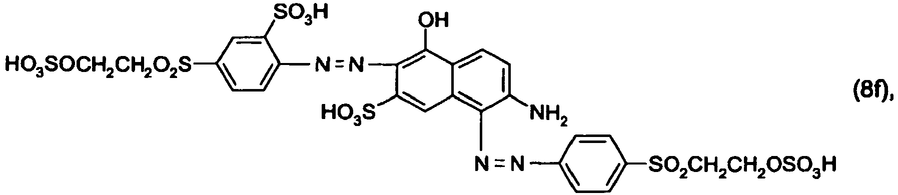 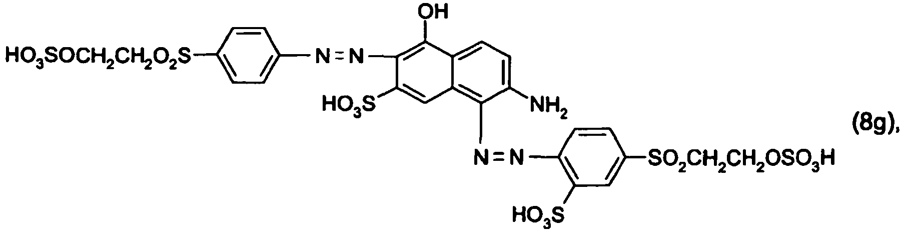 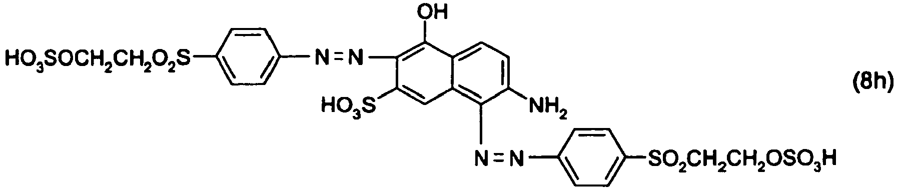 and 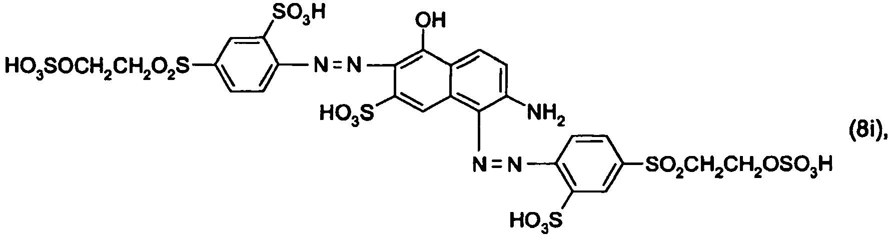 or mixtures of at least one dye from formulae (8f) and (8g) with at least one dye from formulae (8h) and (8i).

The dye of formula (9) is, for example, a dye of formula 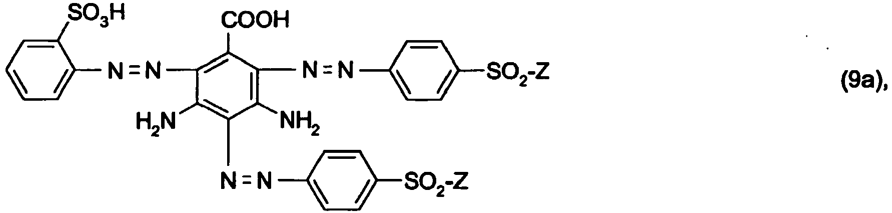 wherein
the definitions and preferred meanings given hereinbefore apply to each Z independently of the other.

The reactive dyes of formulae (1) to (9) in the dye mixtures according to the invention contain sulfo groups, each of which is either in the form of the free sulfonic acid or, preferably, in the form of a salt thereof, for example in the form of the sodium, lithium, potassium or ammonium salt, or in the form of a salt of an organic amine, for example in the form of the triethanolammonium salt

The reactive dyes of formulae (1) to (9), and therefore also the dye mixtures, may comprise further additives, for example sodium chloride or dextrin.

The dyes of formulae (1) and (2) are present in the dye mixture according to the invention in a weight ratio of, for example, from 10:90 to 90:10, preferably from 20:80 to 80:20 and especially from 30:70 to 70:30. The total amount of the dyes of formulae (3) to (9) and the total amount of the dyes of formulae (1) and (2) in the dye mixture according to the invention are in a weight ratio of, for example, from 1:99 to 50:50, preferably from 5:95 to 40:60 and especially from 10:90 to 30:70.

The dyes of formulae (1) to (10) are known or can be prepared according to methods known *per se*. Dyes of formula (1) or (10) are disclosed, for example, in DE 31 13 989 A1, EP 0 063 276 A2 and EP 0 122 600 A1. Dyes of formula (3) are known, for example, from US 5 554 733. Dyes of formula (5) are described, for example, in DE 2 103 299. Dyes of formula (6) are disclosed, for example, in Kokai JP 50-000178. Dyes of formula (7) are known, for example, from US 5 817 779. Dyes of formula (8) are described, for example, in WO 00/06652 or US 6 537 332 B1. Dyes of formula (9) are disclosed, for example, in US 6 160 101.

The dye mixtures according to the invention can be prepared, for example, by mixing the individual dyes. Such a mixing process is carried out, for example, in suitable mills, for example ball mills or pin mills, and also in kneaders or mixers.

The dye mixtures according to the invention may, where appropriate, comprise further auxiliaries that, for example, improve handling or increase storage stability, such as, for example, buffers, dispersants or anti-dusts. Such auxiliaries are known to the person skilled in the art.

The present invention accordingly relates also to a method of dyeing or printing hydroxyl-group-containing or nitrogen-containing fibre materials using the dye mixtures according to the invention.

As fibre materials there come into consideration, for example, natural cellulose fibres, such as cotton, linen, jute or hemp, and modified cellulose fibres, such as cellulose or regenerated cellulose. The dye mixtures according to the invention are suitable especially for dyeing or printing natural polyamide fibre materials, for example silk or wool, synthetic polyamide fibre materials, for example polyamide 6 or polyamide 6,6, or wool blend fabrics and synthetic polyamide blend fabrics. The dye mixtures according to the invention are especially suitable for dyeing or printing natural polyamide fibre materials, especially wool, chlorinated wool or wool provided with a washing machine-resistant finish.

The mentioned textile fibre material may be in a wide variety of processing forms, such as, for example, in the form of fibres, yarns, flocks, woven fabric or knitted fabric.

The dye mixtures according to the invention are suitable for the customary dyeing and printing methods and can be applied and fixed to the fibre material in a very wide variety of ways, especially in the form of aqueous dye solutions or dye print pastes. They are suitable both for the exhaust method and for the pad-dyeing method, in which the goods are impregnated with aqueous dye solutions, which may or may not be salt-containing, and the dyes are fixed by treatment with alkali or in the presence of alkali, where appropriate under the action of heat. The dye mixtures according to the invention are likewise suitable for the so-called "cold pad-batch" method, according to which the dye is applied together with the alkali on the pad-dyeing machine and is then fixed by storing at room temperature for several hours.

The dyeing of natural and synthetic polyamide fibre materials, especially wool, is preferably carried out by the exhaust method at a pH value of approximately from 3 to 7, especially from 3 to 5, and at temperatures of, for example, from 70 to 120°C and especially from 90 to 105°C.

In addition to comprising water and dyes of formulae (1) to (10), the dye liquors or print pastes may comprise further additives, for example per se-known shading dyes, salts, buffer substances, wetting agents, anti-foams, levelling agents, or agents that influence the characteristics of the textile material, for example softeners, additives for flame-resistant finishes or dirt-, water- and oil-repellents and also water-softeners and natural or synthetic thickeners, e.g. alginates and cellulose ethers.

The dye mixtures according to the invention yield level dyeings and prints having good all-round fastness properties, especially good fastness to washing, to rubbing, to wetting, to wet rubbing and to light, and having a high degree of constancy of shade. The dye mixtures according to the invention are also distinguished by uniform colour build-up, good affinity, and high degrees of fixing. Furthermore, using the dye mixtures according to the invention it is possible to dispense with the otherwise customary aftertreatment of the dyeings and prints with so-called fixing agents.

The dye mixtures according to the invention are also suitable as colorants for use in recording systems. Such recording systems are, for example, commercially available inkjet printers for paper or textile printing, or writing instruments, such as fountain pens or ballpoint pens and especially inkjet printers. For that purpose, the dye mixture according to the invention is first brought into a form suitable for use in recording systems. A suitable form is, for example, an aqueous ink that comprises the dye mixture according to the invention as colorant. The inks can be prepared in customary manner by mixing together the individual constituents in the desired amount of water.

Substrates that come into consideration include the above-mentioned hydroxyl-group-containing or nitrogen-containing fibre materials, especially natural or synthetic polyamide fibre materials.

The dyes used in the aqueous inks should preferably have a low salt content, that is to say they should have a total content of salts of less than 0.5 % by weight, based on the weight of the dyes. Dyes that have relatively high salt contents as a result of their preparation and/or as a result of the subsequent addition of diluents can be desalted, for example, by membrane separation procedures, such as ultrafiltration, reverse osmosis or dialysis.

The inks preferably have a total content of dyes of from 1 to 35 % by weight, especially from 1 to 30 % by weight and preferably from 1 to 20 % by weight, based on the total weight of the ink. The preferred lower limit in this case is a limit of 1.5 % by weight, preferably 2 % by weight and especially 3 % by weight.

The inks may comprise water-miscible organic solvents, for example C₁-C₄alcohols, e.g. methanol, ethanol, n-propanol, isopropanol, n-butanol, sec-butanol, tert-butanol or isobutanol; amides, e.g. dimethylformamide or dimethylacetamide; ketones or ketone alcohols, e.g. acetone, diacetone alcohol; ethers, e.g. tetrahydrofuran or dioxane; nitrogen-containing heterocyclic compounds, e.g. N-methyl-2-pyrrolidone or 1,3-dimethyl-2-imidazolidone, polyalkylene glycols, e.g. polyethylene glycol or polypropylene glycol; C₂-C₆alkylene glycols and thioglycols, e.g. ethylene glycol, propylene glycol, butylene glycol, triethylene glycol, thiodiglycol, hexylene glycol and diethylene glycol; other polyols, e.g. glycerol or 1,2,6-hexanetriol; and C₁-C₄alkyl ethers of polyhydric alcohols, e.g. 2-methoxyethanol, 2-(2-methoxy-ethoxy)ethanol, 2-(2-ethoxyethoxy)ethanol, 2-[2-(2-methoxyethoxy)ethoxy]ethanol or 2-[2-(2-ethoxyethoxy)ethoxy]ethanol; preferably N-methyl-2-pyrrolidone, diethylene glycol, glycerol or especially 1,2-propylene glycol, usually in an amount of from 2 to 30 % by weight, especially from 5 to 30 % by weight and preferably from 10 to 25 % by weight, based on the total weight of the ink.

In addition, the inks may also comprise solubilisers, e.g. ε-caprolactam.

The inks may comprise thickeners of natural or synthetic origin *inter alia* for the purpose of adjusting the viscosity.

Examples of thickeners that may be mentioned include commercially available alginate thickeners, starch ethers or locust bean flour ethers, especially sodium alginate on its own or in admixture with modified cellulose, e.g. methyl cellulose, ethyl cellulose, carboxymethyl cellulose, hydroxyethyl cellulose, methyl hydroxyethyl cellulose, hydroxypropyl cellulose or hydroxypropyl methyl cellulose, especially with preferably from 20 to 25 % by weight carboxymethyl cellulose. Synthetic thickeners that may be mentioned are, for example, those based on poly(meth)acrylic acids or poly(meth)acrylamides and also polyalkylene glycols having a molecular weight of e.g. from 2000 to 20 000, for example polyethylene glycol or polypropylene glycol or the mixed polyalkylene glycols of ethylene oxide and propylene oxide.

The inks comprise such thickeners, for example, in an amount of from 0.01 to 2 % by weight, especially from 0.01 to 1 % by weight and preferably from 0.01 to 0.5 % by weight, based on the total weight of the ink.

The inks may also comprise buffer substances, e.g. borax, borates, phosphates, polyphosphates or citrates. Examples that may be mentioned include borax, sodium borate, sodium tetraborate, sodium dihydrogen phosphate, disodium hydrogen phosphate, sodium tripolyphosphate, sodium pentapolyphosphate and sodium citrate. They are used especially in amounts of from 0.1 to 3 % by weight, preferably from 0.1 to 1 % by weight, based on the total weight of the ink, in order to establish a pH value of, for example, from 4 to 9, especially from 5 to 8.5.

As further additives, the inks may comprise surfactants or humectants.

Suitable surfactants include commercially available anionic or non-ionic surfactants. As humectants in the inks according to the invention there come into consideration, for example, urea or a mixture of sodium lactate (advantageously in the form of a 50 % to 60 % aqueous solution) and glycerol and/or propylene glycol in amounts of preferably from 0.1 to 30 % by weight, especially from 2 to 30 % by weight.

Preference is given to inks having a viscosity of from 1 to 40 mPa·s, especially from 1 to 20 mPa·s and more especially from 1 to 10 mPa·s.

Furthermore, the inks may in addition comprise customary additives, e.g. anti-foams or especially preservatives that inhibit fungal and/or bacterial growth. Such additives are usually used in amounts of from 0.01 to 1 % by weight, based on the total weight of the ink.

Preservatives that come into consideration include formaldehyde-yielding agents, e.g. paraformaldehyde and trioxane, especially aqueous, approximately 30 to 40 % by weight formaldehyde solutions, imidazole compounds, e.g. 2-(4-thiazolyl)benzimidazole, thiazole compounds, e.g. 1 ,2-benzisothiazolin-3-one or 2-n-octyl-isothiazolin-3-one, iodine compounds, nitriles, phenols, haloalkylthio compounds or pyridine derivatives, especially 1,2-benzisothiazolin-3-one or 2-n-octyl-isothiazolin-3-one. A suitable preservative is e.g. a 20 % by weight solution of 1,2-benzisothiazolin-3-one in dipropylene glycol (Proxel^{®} GXL).

The inks may also comprise further additives, such as fluorinated polymers or telomers, e.g. polyethoxyperfluoroalcohols (Forafac^{®} or Zonyl^{®} products) in an amount of e.g. from 0.01 to 1 % by weight, based on the total weight of the ink.

In inkjet printing, individual droplets of the ink are sprayed onto a substrate in a controlled manner from a nozzle. For that purpose, predominantly the continuous inkjet method and the drop-on-demand method are used. In the continuous inkjet method, the droplets are produced continuously and any droplets not required for the printing are conveyed to a collecting vessel and recycled, whereas in the drop-on-demand method droplets are produced and printed as required, that is to say droplets are produced only when required for the printing. The production of the droplets can be effected, for example, by means of a piezo-inkjet head or by means of thermal energy (bubble jet). Printing by means of a piezo-inkjet head and printing in accordance with the continuous inkjet method are preferred.

The present invention accordingly relates also to aqueous inks comprising the dye mixtures according to the invention and to the use of such inks in an inkjet printing method for the printing of various substrates, especially textile fibre materials, the definitions and preferred meanings mentioned above applying to the dye mixtures, the inks and the substrates.

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

Example 1: 10 parts of a wool fabric are dyed in a laboratory dyeing apparatus using the follow liquor:
0.2 part of sodium acetate,
0.5 part of 80 % acetic acid,
0.2 part of a commercially available levelling agent (Albegal B^{®}),
0.14 part of the dye of formula (1a) wherein Z is β-sulfatoethyl,
0.18 part of the dye of formula (2a) wherein Z is β-sulfatoethyl,
0.06 part of the dye of formula (5d) wherein each Y is a -CH(Br)-CH₂-Br group, and
0.02 part of the dye of formula (7a) wherein Z is β-sulfatoethyl, and
200 parts of water.

The pH of the liquor is 4.5. The textile is treated for 5 min at 40°C in the dye liquor, then heated at a heating rate of 1°/min. to boiling temperature (98°C) and dyed for 90 minutes at that temperature. After cooling the liquor to 80°C, a solution of 0.8 part of sodium carbonate in 8 parts of water is added and the textile material is treated for 20 min. at 80°C and a pH of 8.5. The dyeing is then rinsed and finished in the usual manner. A fibre-level and surface-level black dyeing having good fastness properties and a high degree of constancy of shade is obtained.

Examples 2 to 10: By proceeding as indicated in Example 1 but, instead of using 0.14 part of /0 the dye of formula (1a), 0.18 part of the dye of formula (2a), 0.06 part of the dye of formula (5d) and 0.02 part of the dye of formula (7a), using the dyes indicated in column 2 of the following Table 1 in the amounts given therein, there are likewise obtained black fibre-level and surface-level dyeings having good fastness properties and a high degree of constancy of shade.

**Table 1**

| Ex. | Dye mixture |
|---|---|
| 2 | 0.20 part of the dye of formula (1a) wherein Z is β-sulfatoethyl, |
| | 0.104 part of the dye of formula (2a) wherein Z is β-sulfatoethyl, |
| | 0.068 part of the dye of formula (3a) wherein Y is a -CH(Br)-CH₂-Br group, and |
| | 0.028 part of the dye of formula (7a) wherein Z is β-sulfatoethyl. |
| 3 | 0.10 part of the dye of formula (1a) wherein Z is β-sulfatoethyl, |
| | 0.208 part of the dye of formula (2a) wherein Z is β-sulfatoethyl, |
| | 0.04 part of the dye of formula (5d) wherein each Y is a -CH(Br)-CH₂-Br group, |
| | 0.028 part of the dye of formula (3a) wherein Y is a -CH(Br)-CH₂-Br group, and |
| | 0.024 part of the dye of formula (7a) wherein Z is β-sulfatoethyl. |
| 4 | 0.16 part of the dye of formula (1a) wherein Z is β-sulfatoethyl, |
| | 0.144 part of the dye of formula (2a) wherein Z is β-sulfatoethyl, |
| | 0.056 part of the dye of formula (3a) wherein Y is a -CH(Br)-CH₂-Br group, and |
| | 0.04 part of the dye of formula (7b) wherein Z is β-sulfatoethyl. |
| 5 | 0.16 part of the dye of formula (1a) wherein Z is β-sulfatoethyl, |
| | 0.148 part of the dye of formula (2a) wherein Z is β-sulfatoethyl, |
| | 0.052 part of the dye of formula (6b) wherein Z is β-sulfatoethyl, und |
| | 0.04 part of the dye of formula (7b) wherein Z is β-sulfatoethyl. |
| 6 | 0.16 part of the dye of formula (1a) wherein Z is β-sulfatoethyl, |
| | 0.16 part of the dye of formula (2a) wherein Z is β-sulfatoethyl, |
| | 0.064 part of the dye of formula (4b) wherein each Y is a -C(Br)=CH₂ group, and |
| | 0.016 part of the dye of formula (7a) wherein Z is β-sulfatoethyl. |
| 7 | 0.16 part of the dye of formula (1a) wherein Z is β-sulfatoethyl, |
| | 0.148 part of the dye of formula (2a) wherein Z is β-sulfatoethyl, |
| | 0.052 part of the dye of formula (6a) wherein Z is β-sulfatoethyl, and |
| | 0.04 part of the dye of formula (7b) wherein Z is β-sulfatoethyl. |
| 8 | 0.19 part of the dye of formula (1a) wherein Z is β-sulfatoethyl, |
| | 0.11 part of the dye of formula (2a) wherein Z is β-sulfatoethyl, |
| | 0.06 part of the dye of formula (8e) and |
| | 0.04 part of the dye of formula (7a) wherein Z is β-sulfatoethyl. |
| 9 | 0.20 part of the dye of formula (1a) wherein Z is β-sulfatoethyl, |
| | 0.104 part of the dye of formula (2a) wherein Z is β-sulfatoethyl, |
| | 0.06 part of a mixture of dyes of formulae (8f), (8g), (8h) and (8i), and |
| | 0.036 part of the dye of formula (7a) wherein Z is β-sulfatoethyl. |
| 10 | 0.10 part of the dye of formula (1 a) wherein Z is β-sulfatoethyl, |
| | 0.20 part of the dye of formula (2a) wherein Z is β-sulfatoethyl, and |
| | 0.10 part of the dye of formula (7a) wherein Z is β-sulfatoethyl. |

Example 11: 10 parts of a wool tricot finished to Superwash standard according to the Hercoset process is dyed in a laboratory dyeing apparatus using the following liquor:
0.2 part of sodium acetate,
0.5 part of 80 % acetic acid,
0.5 part of Glauber's salt,
0.2 part of a commercially available levelling agent (Albegal B^{®}),
0.14 part of the dye of formula (1a) wherein Z is β-sulfatoethyl,
0.18 part of the dye of formula (2a) wherein Z is β-sulfatoethyl,
0.06 part of the dye of formula (5d) wherein each Y is a -CH(Br)-CH₂-Br group, and
0.02 part of the dye of formula (7a) wherein Z is β-sulfatoethyl, and
200 parts of water.

The pH of the liquor is 4.7. The textile material is treated in the dye liquor for 5 minutes at 40°C, then heated at a heating rate of 1°/min. to 60°C and maintained at 60°C for 20 minutes. Heating is then carried out at a rate of 1°/min. to boiling temperature (98°C) and dyeing is carried out for 90 minutes at that temperature. After cooling, the textile material is treated in a fresh liquor containing sodium hydrogen carbonate (0.5 %) for 20 minutes at 80°C and pH 8.3. Rinsing is then carried out in the usual manner and 1 % formic acid, based on the fibre weight, is added to the final rinsing bath for acid treatment. A fibre-level and surface-level black dyeing having good fastness properties and a high degree of constancy of shade is obtained.

In an analogous manner, a dye mixture according to any one of Examples 2 to 10 may be used instead of the dye mixture of 0.14 part of the dye of formula (1a), 0.18 part of the dye of formula (2a), 0.06 part of the dye of formula (5d) and 0.02 part of the dye of formula (7a).

Example 12: 10 parts of loose wool are dyed in a laboratory dyeing apparatus using the following liquor:
0.4 part of sodium acetate,
1.0 part of 80 % acetic acid,
0.2 part of a commercially available levelling agent (Albegal SET^{®}),
0.2 part of a commercially available levelling agent (Albegal B^{®}),
0.14 part of the dye of formula (1a) wherein Z is β-sulfatoethyl,
0.18 part of the dye of formula (2a) wherein Z is β-sulfatoethyl,
0.06 part of the dye of formula (5d) wherein each Y is a -CH(Br)-CH₂-Br group, and
0.02 part of the dye of formula (7a) wherein Z is β-sulfatoethyl, and
800 parts of water.

The pH of the liquor is 4.7. The material is treated in the dye liquor for 5 minutes at 40°C and then heated at a heating rate of 1 °C/min. to boiling temperature (98°C) and dyed for 90 minutes at that temperature. After cooling the liquor to 80°C, the dyeing is rinsed and finished in the usual manner. A fibre-level and surface-level black dyeing having good fastness properties and a high degree of constancy of shade is obtained.

In an analogous manner, a dye mixture according to any one of Examples 2 to 10 may be used instead of the dye mixture of 0.14 part of the dye of formula (1 a), 0.18 part of the dye of formula (2a), 0.06 part of the dye of formula (5d) and 0.02 part of the dye of formula (7a).

Example 13: 1000 parts of combed wool yam in the form of a cross-wound bobbin is pretreated for 10 minutes at 40°C in a circulatory apparatus using a liquor consisting of 9000 parts of water,
9 parts of ammonium acetate,
37 parts by volume of 80 % acetic acid,
9 parts of a non-ionic wetting agent (Albegal FFA^{®}), and
20 parts of a commercially available levelling agent (Albegal B^{®}).

The pH of the liquor is 4.65.

After the addition of a solution containing 14 parts of the dye of formula (1 a), 18 parts of the dye of formula (2a), 6 parts of the dye of formula (5d) und 2 parts of the dye of formula (7a), treatment is carried out in the dye liquor for 5 minutes at 40°C followed by heating at a heating rate of 1°C/min to 70°C and maintaining at 70°C for 15 minutes. Heating is then carried out at a rate of 1°/min. to boiling temperature (98°C) and dyeing is carried out for 90 minutes at that temperature. After cooling, the textile material is treated for 20 minutes at 80°C in a fresh liquor, which has been adjusted to pH 8.5 using 35 parts of 35 % ammonia. Rinsing is then carried out in the usual manner and 1 % formic acid, based on the fibre weight, is added to the final rinsing bath for acid treatment. A fibre-level and surface-level black dyeing having good fastness properties and a high degree of constancy of shade is obtained.

Example 14: Proceeding as described in Example 13 but, in addition, adding to the dye liquor 4 % by weight, based on the textile material, of a commercially available wool-protecting agent (Irgasol HTW^{®}), dyeing at 105°C and reducing the dyeing time to 45 min., there is likewise obtained a fibre-level and surface-level black dyeing having good fastness properties and a high degree of constancy of shade.

Example 15: 100 parts of a cotton fabric are introduced at a temperature of 60°C into a dye bath containing 2.4 parts of the dye of formula (1a), wherein Z is β-sulfatoethyl, 2.22 parts of the dye of formula (2a), wherein Z is β-sulfatoethyl, 0.78 part of the dye of formula (6b), wherein Z is β-sulfatoethyl, and 0.6 part of the dye of formula (7b), wherein Z is β-sulfatoethyl, and 60 parts of sodium chloride in 1000 parts of water. After 45 minutes at 60°C, 20 parts of calcined soda are added. The temperature of the dye bath is maintained at 60°C for a further 45 minutes. The dyed fabric is then rinsed and dried in the usual manner. A fibre-level and surface-level black dyeing having good fastness properties and a high degree of constancy of shade is obtained.

Example 16: The procedure is as described in Example 15 but there is used, instead of 0.6 part of the dye of formula (7b), the same amount of the dye of formula (9a), wherein Z is β-sulfatoethyl. A fibre-level and surface-level black dyeing having good fastness properties and a high degree of constancy of shade is obtained.

### Example 17:

(a) Mercerised cotton satin is pad-dyed using a liquor containing 30 g/l of sodium carbonate and 50 g/l of urea (70 % liquor pick-up) and dried.
(b) Using a drop-on-demand inkjet head (bubble jet), there is printed onto the cotton satin pretreated according to step (a) an aqueous ink containing
   - 10 % by weight of a mixture of 2.4 parts of the dye of formula (1a), wherein Z is β-sulfatoethyl, 2.22 parts of the dye of formula (2a), wherein Z is β-sulfatoethyl, 0.78 part of the dye of formula (6b), wherein Z is β-sulfatoethyl, and 0.6 part of the dye of formula (7b), wherein Z is β-sulfatoethyl,
   - 20 % by weight of 1,2-propylene glycol and
   - 70 % by weight of water.

The print is fully dried and is fixed in saturated steam at 102°C for 8 minutes, cold-rinsed, washed-off at boiling temperature, rinsed again and dried.

A black print having good fastness properties and a high degree of constancy of shade is obtained.

## Claims

1. A dye mixture comprising
at least one dye of formula 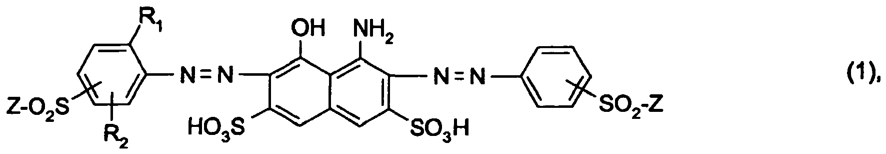 at least one dye of formula 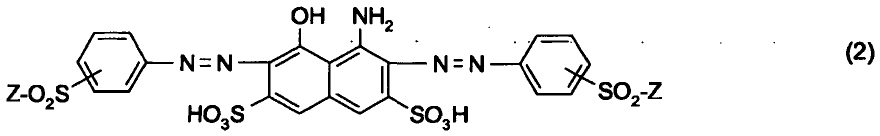 and at least one dye from the group of formulae 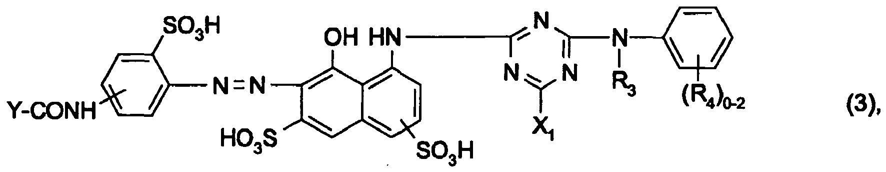 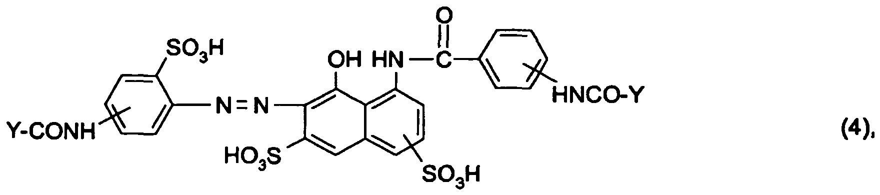 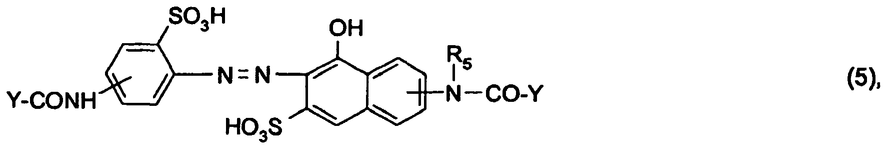 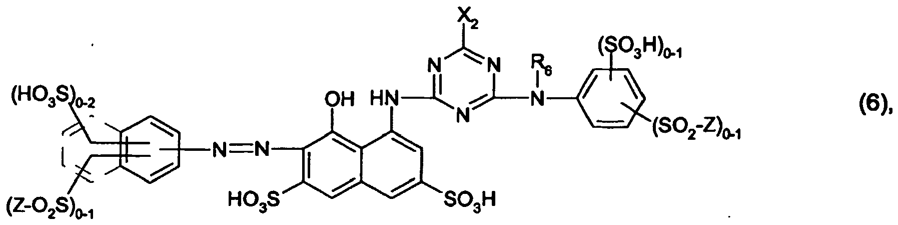 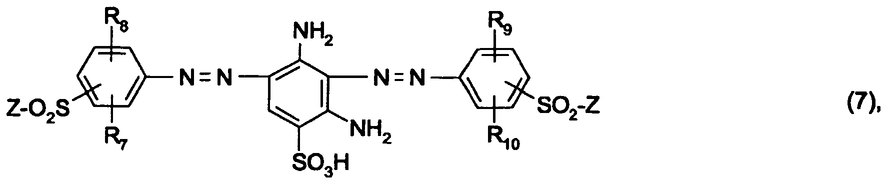 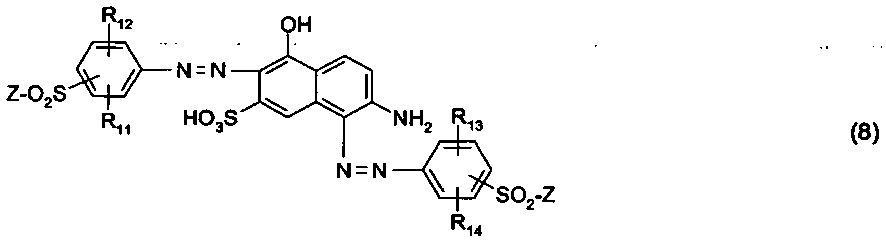 and 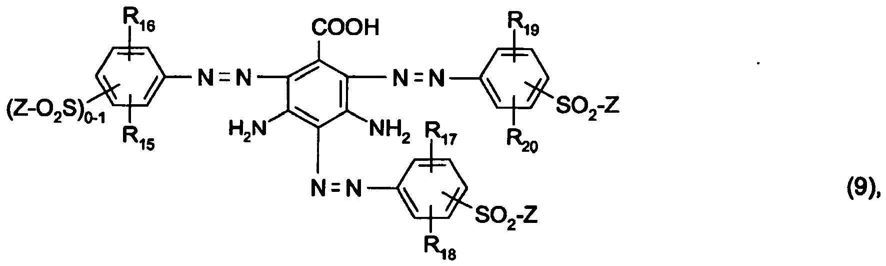 wherein
R₁ is C₁-C₄alkoxy,
R₂ is hydrogen, C₁-C₄alkyl or C₁-C₄alkoxy,
R₃, R₅ and R₆ are each independently of the others hydrogen or unsubstituted or substituted C₁-C₄alkyl,
(R₄)₀₋₂ denotes from 0 to 2 identical or different substituents from the group halogen, C₁-C₄alkyl, C₁-C₄alkoxy and C₂-C₄alkanoylamino,
R₇, R₈, R₉, R₁₀, R₁₁, R₁₂, R₁₃, R₁₄, R₁₅, R₁₆, R₁₇, R₁₈, R₁₉ and R₂₀ are each independently of the others hydrogen, C₁-C₄alkyl, C₁-C₄alkoxy, sulfo or halogen,
X₁ and X₂ are halogen,
each Y, independently of any other(s), is a -CH(Hal)-CH₂-Hal or -C(Hal)=CH₂ group and Hal is halogen, and
each Z, independently of any other(s), is vinyl or a -CH₂-CH₂-U radical and U is a group that can be removed under alkaline conditions.

2. A dye mixture according to claim 1, wherein
R₂ is hydrogen or C₁-C₄alkoxy, preferably C₁-C₄alkoxy.

3. A dye mixture according to either claim 1 or claim 2, wherein
R₃, R₅ and R₆ are each independently of the others hydrogen or C₁-C₄alkyl.

4. A dye mixture according to any one of claims 1 to 3, wherein X₁ and X₂ are chlorine.

5. A dye mixture according to any one of claims 1 to 4, wherein the dye of formula (1) is a dye of formula 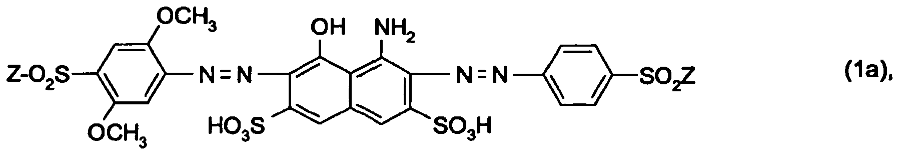 wherein
Z is vinyl or β-sulfatoethyl.

6. A dye mixture according to any one of claims 1 to 5, wherein the dye of formula (2) is a dye of formula 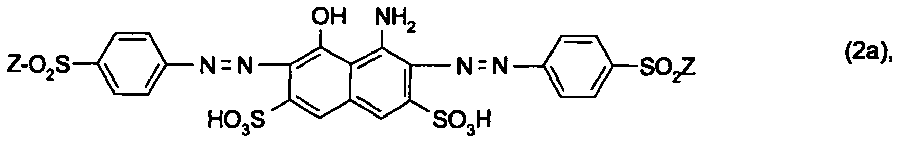 wherein
Z is vinyl or β-sulfatoethyl.

7. The use of a dye mixture according to any one of claims 1 to 6 in the dyeing or printing of hydroxyl-group-containing or nitrogen-containing fibre material.

8. Use according to claim 7, wherein natural or synthetic polyamide-containing fibre material is dyed or printed.

9. An aqueous ink comprising a dye mixture according to claim 1.

10. The use of an aqueous ink according to claim 9 in an inkjet printing method for the printing of hydroxyl-group-containing or nitrogen-containing fibre material.

## Patentansprüche

1. Farbstoffmischung, umfassend wenigstens einen Farbstoff der Formel 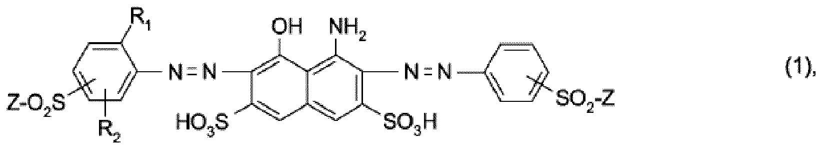 wenigstens einen Farbstoff der Formel 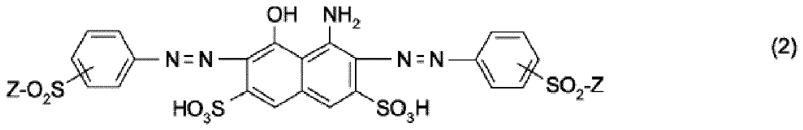 und wenigstens einen Farbstoff aus der Gruppe der Formeln 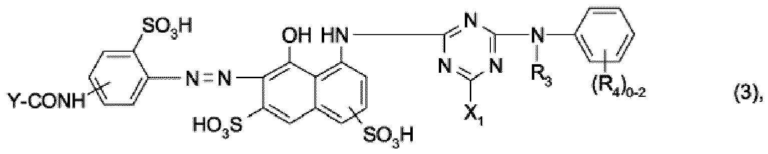 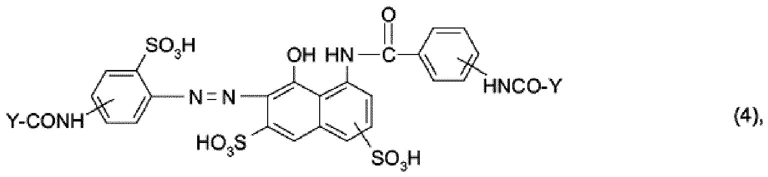 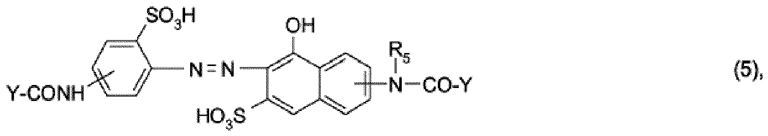 wobei
R₁ C₁-C₄-Alkoxy ist,
R₂ Wasserstoff, C₁-C₄-Alkyl oder C₁-C₄-Alkoxy ist,
R₃, R₅ und R₆ jeweils unabhängig voneinander Wasserstoff oder unsubstituiertes oder substituiertes C₁-C₄-Alkyl sind,
(R₄)₀₋₂ von 0 bis 2 identische oder verschiedene Substituenten aus der Gruppe Halogen, C₁-C₄-Alkyl, C₁-C₄-Alkoxy und C₂-C₄-Alkanoylamino bezeichnet, R₇, R₈, R₉, R₁₀, R₁₁, R₁₂, R₁₃, R₁₄, R₁₅, R₁₆, R₁₇, R₁₈, R₁₉ und R₂₀ jeweils unabhängig voneinander Wasserstoff, C₁-C₄-Alkyl, C₁-C₄-Alkoxy, Sulfor oder Halogen sind,
X₁ und X₂ Halogen sind,
jedes Y unabhängig von irgendwelchen anderen eine -CH(Hal)-CH₂-Hal- oder -C(Hal)=CH₂-Gruppe und Hal Halogen ist und und
jedes Z unabhängig von irgendwelchen anderen Vinyl oder ein -CH₂-CH₂-U Rest ist und U eine Gruppe ist, welche unter alkalischen Bedingungen entfernt werden kann.

2. Farbstoffmischung gemäß Anspruch 1, wobei R₂ Wasserstoff oder C₁-C₄-Alkoxy, bevorzugt C₁-C₄-Alkoxy, ist.

3. Farbstoffmischung gemäß entweder Anspruch 1 oder Anspruch 2, wobei R₃, R₅ und R₈ jeweils unabhängig voneinander Wasserstoff oder C₁-C₄-Alkyl sind.

4. Farbstoffmischung gemäß irgendeinem der Ansprüche 1 bis 3, wobei X₁ und X₂ Chlor sind.

5. Farbstoffmischung gemäß irgendeinem der Ansprüche 1 bis 4, wobei der Farbstoff der Formel (1) ein Farbstoff der Formel 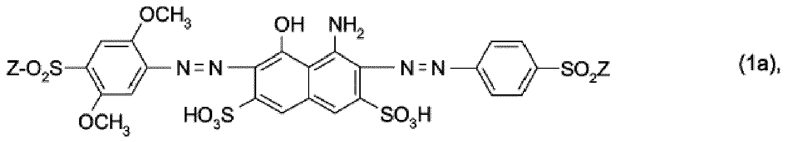 ist,
wobei Z Vinyl oder β-Sulfatoethyl ist.

6. Farbstoffmischung gemäß irgendeinem der Ansprüche 1 bis 5, wobei der Farbstoff der Formel (2) ein Farbstoff der Formel 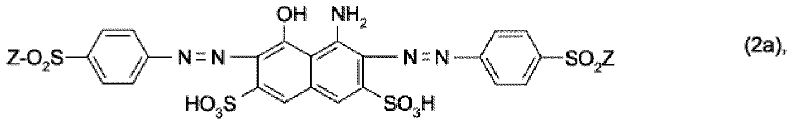 ist,
wobei Z Vinyl oder β-Sulfatoethyl ist.

7. Verwendung einer Farbstoffmischung gemäß irgendeinem der Ansprüche 1 bis 6 zum Färben oder Bedrucken von hydroxylgruppenhaltigem oder stickstoffhaltigem Fasermaterial.

8. Verwendung gemäß Anspruch 7, wobei natürliche oder synthetische polyamidhaltige Fasermaterialien gefärbt oder bedruckt werden.

9. Wässrige Tinte, umfassend eine Farbstoffmischung gemäß Anspruch 1.

10. Verwendung einer wässrigen Tinte gemäß Anspruch 9 in einem Tintenstrahldruckverfahren zum Bedrucken von hydroxylgruppenhaltigem oder stickstoffhaltigem Fasermaterial.

## Revendications

1. Mélange de colorants comprenant au moins un colorant de formule : 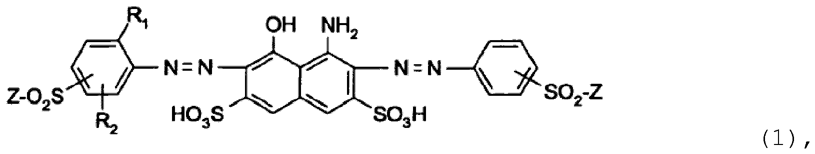 au moins un colorant de formule : 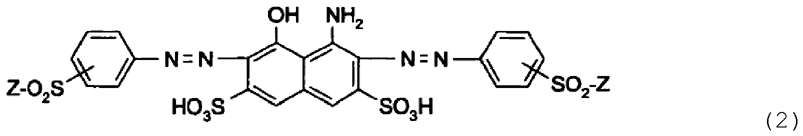 et au moins un colorant du groupe de formules : 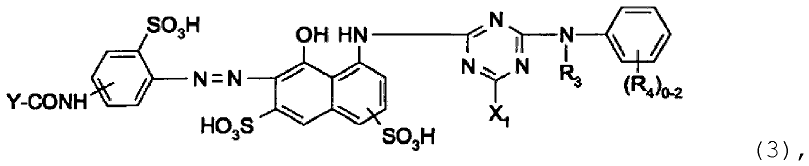 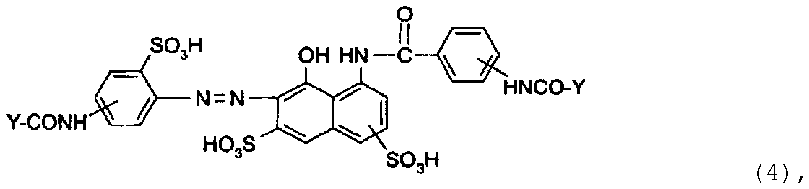 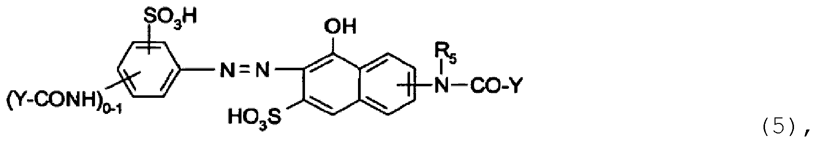 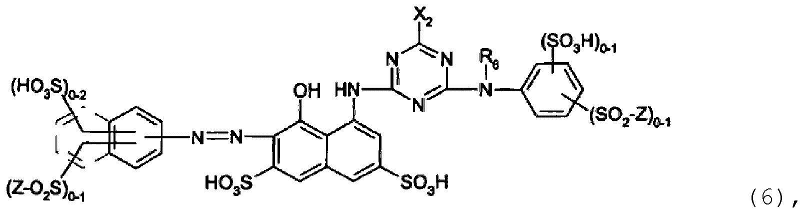 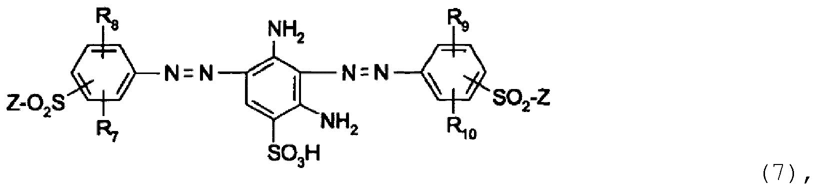 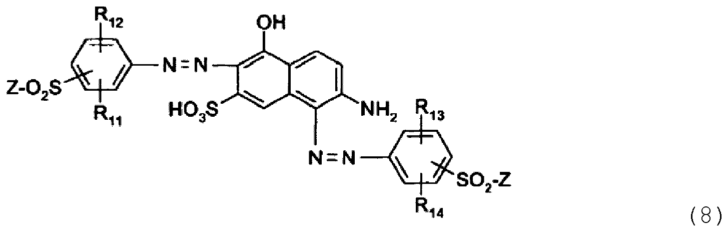 et 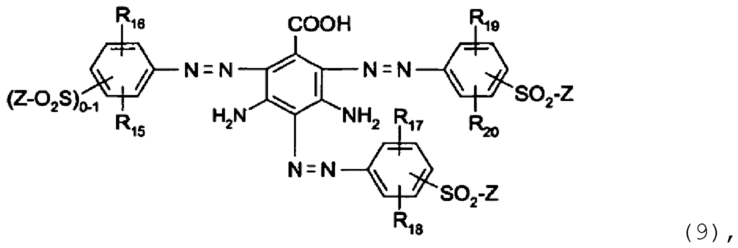 dans lesquelles :
- R₁ représente alcoxy en C₁-C₄ ;
- R₂ représente hydrogène, alkyle en C₁-C₄ ou alcoxy en C₁-C₄ ;
- R₃, R₅ et R₆ représentent chacun indépendamment des autres hydrogène ou alkyle en C₁-C₄ non substitué ou substitué ;
- (R₄)₀₋₂ désigne de 0 à 2 substituants identiques ou différents du groupe halogène, alkyle en C₁-C₄, alcoxy en C₁-C₄ et alcanoylamino en C₂-C₄ ;
- R₇, R₈ R₉ R₁₀, R₁₁, R₁₂, R₁₃, R₁₄, R₁₅, R₁₆, R₁₇, R₁₈, R₁₉ et R₂₀ représentent chacun indépendamment des autres hydrogène, alkyle en C₁-C₄, alcoxy en C₁-C₄, sulfo ou halogène ;
- X₁ et X₂ représentent halogène ;
- chaque Y, indépendamment d'un quelconque autre ou de quelconques autres, représente un groupe -CH(Hal)-CH₂-Hal ou -C(Hal)=CH₂ et Hal représente halogène ; et
- chaque Z, indépendamment d'un quelconque autre ou de quelconques autres, représente vinyle ou un radical -CH₂-CH₂-U et U est un groupe qui peut être éliminé dans des conditions alcalines.

2. Mélange de colorants selon la revendication 1, dans lequel R₂ représente hydrogène ou alcoxy en C₁-C₄, de préférence alcoxy en C₁-C₄.

3. Mélange de colorants selon soit la revendications 1 soit la revendication 2, dans lequel R₃, R₅ et R₆ représentent chacun indépendamment des autres hydrogène ou alkyle en C₁-C₄.

4. Mélange de colorants selon l'une quelconque des revendications 1 à 3, dans lequel X₁ et X₂ représentent chlore.

5. Mélange de colorants selon l'une quelconque des revendications 1 à 4, dans lequel le colorant de formule (1) est un colorant de formule : 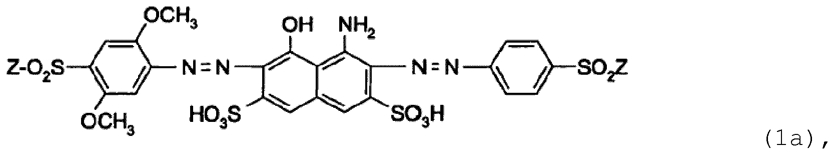 dans laquelle
Z représente vinyle ou β-sulfatoéthyle.

6. Mélange de colorants selon l'une quelconque des revendications 1 à 5, dans lequel le colorant de formule (2) est un colorant de formule : 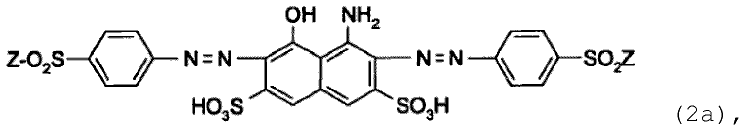 dans laquelle
Z représente vinyle ou β-sulfatoéthyle.

7. Utilisation d'un mélange de colorants selon l'une quelconque des revendications 1 à 6 dans la teinture ou l'impression d'une matière fibreuse à teneur en groupe hydroxyle ou à teneur en azote.

8. Utilisation selon la revendication 7, dans laquelle une matière fibreuse contenant un polyamide naturel ou synthétique est teinte ou imprimée.

9. Encre aqueuse comprenant un mélange de colorants selon la revendication 1.

10. Utilisation d'une encre aqueuse selon la revendication 9 dans une méthode d'impression à jet d'encre pour l'impression d'une matière fibreuse à teneur en groupe hydroxyle ou à teneur en azote.
